(19) Europäisches Patentamt
European Patent Office
Office européen des brevets

(11) **EP 2 993 646 A2**

(12) **EUROPEAN PATENT APPLICATION**

(43) Date of publication:
**09.03.2016 Bulletin 2016/10**

(51) Int Cl.:
***G06T 15/00*** *(2011.01)* ***G06T 15/06*** *(2011.01)*

(21) Application number: **14306370.9**

(22) Date of filing: **05.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Lecocq, Pascal**
**35576 Cesson Sévigné Cedex (FR)**
• **Dufay, Arthur**
**35576 Cesson Sévigné Cedex (FR)**
• **Marvie, Jean-Eudes**
**35576 Cesson Sévigné Cedex (FR)**

(74) Representative: **Huchet, Anne**
**Technicolor**
**1-5 rue Jeanne d'Arc**
**92130 Issy-Les-Moulineaux (FR)**

(54) **Device and process for improving efficiency of image rendering**

(57) In rendering an image including a set of pixels (41) and representing a 3D scene including surface elements, each pixel (41 ij) is constructed from light contributions corresponding to rays coupling the pixel and the surface elements in function of their light interaction features.

Memory elements (430ij, 431 ij...) are respectively associated with the pixels, storing data on ray directions (V0...V7). The rays are ordered in each memory element for one or several surface elements, by an ordering method applied to the rays in function of the ray directions in the memory element. The ordered rays are available to computation processing circuits in processing the pixels.

This makes possible a significant reduction of cache misses in parallel computing.

Fig 5

**Description**

**1. Technical domain**

The present disclosure relates to the domain of image generation or rendering in the representation of three-dimensional scenes, and concerns more especially the efficiency of processing for indirect lighting. It pertains to Computer Generated Image (CGI or 3D-CGI).

**2. Background art**

The problems of cache coherent memory access on GPUs (Graphics Processing Units) in the frame of interactive stochastic ray tracing - or distributed ray tracing - are well known. Indeed, rendering of realistic lighting effects, especially in movie production, require proper simulation of full light exchanges in a scene by taking into account direct as well as indirect lighting contributions. However, solving the rendering equation representing the integral of all lighting contributions reaching a surface, which are scattered in all directions, is really challenging.

The combined exploitation of massive parallel GPU computing and dedicated spatial acceleration structures, mapping very well on GPU memory and offering good locality of data, has led to significant progresses in reducing computation time, while allowing interactive rendering with some quality tradeoff. Among successful spatial acceleration structures, BVH (Bounding Volume Hierarchy) has been notably privileged.

More specifically, efficient GPUs for ray-tracing applications rely on SIMD (Single Instruction Multiple Data) parallel programming model (the term SIMD being referred to here as covering SIMT as well, for Single Instruction Multiple Thread). Typically, then, a GPU instantiate a kernel program such as a ray intersection, on a grid of parallel thread blocks called a warp. Each thread block contains a set of concurrently executing threads that execute the same kernel. Threads within a block have access to a first-level cache memory, or L1 cache, while threads across blocks are sharing a slightly slower shared second-level cache memory, or L2 cache.

In the frame of ray tracing, the processing of pixels in images is grouped by means of thread blocks, allowing multiple rays to be evaluated in parallel across pixels of the image. For sake of efficiency, cache prefetching proves quite useful: when a thread requests data from a texture or a buffer not available in the associated L1 cache, or failing which in the associated L2 cache, the GPU prefetches a cache block, thereby making local memory data available for other threads in the same block (L1 cache) or the same warp (L2 cache).

Locality of data accessed by a group of threads in a block or in a warp therefore appears key for good data bandwidth. Namely, scattered data accesses lead to poor performances.

Consequently, various methods have been worked out directed to cache coherent ray tracing, and this subject-matter has been the focus of several studies. For example, it can be referred to the survey by Dominik Wodniok, André Schulz, Sven Widmer and Michael Goesele, "Analysis of Cache Behavior and Performance of Different BVH Memory Layouts for Tracing Incoherent Rays" in Proceedings of the Eurographics Sympsium on Parallel Graphics and Visualization (EGPV 2013), Girona, Spain, pp. 57-64, 2013, devoted to ray tracing performances on CPU (Central Processing Unit) and GPU regarding cache coherency.

Among the existing solutions, packet ray tracing exploits coherency of primary rays for tracing massive models containing millions of polygons. Space filling curves were proposed for reordering primary rays so as to improve performance, considering cache of geometry, and a scheduling grid was exploited later for queuing rays and processing them in a coherent manner. Exploiting CPU SIMD instructions considering parallel tracing of 2x2 ray packets was also considered. Those packet ray tracing methods are however restricted to primary rays or to shadow visibility computations.

The handling of both primary rays and secondary rays (corresponding to indirect lighting) was tackled by Bochang Moon, Youngyong Byun, Tae_Joon Kim, Pio Claudio, Hye-sun Kim, Yun-ji Ban, Seung Woo Nam, and Sung-Eui Yoon, "Cache-Oblivious Ray Reordering", in ACM Transactions on Graphics, Vol. 29, No. 3, 2010. Within a ray reordering framework working on CPU, hit points of secondary rays are first determined through performing intersections on simplified meshes. Then, rays are reordered according to a 3D Morton order from quantization of 3D coordinates of hit points, and are subsequently pushed into an in-core ray buffer or an out-of-core ray buffer.

However, a drawback of this method is that a simplified version of the scene and one additional ray traversal are required.

Another ray-tracing architecture, suited for GPU parallel computing, has been presented by Timo Aila and Tero Karras, "Architecture Considerations for Tracing Incoherent Rays" in High-Performance Graphics, pp. 113-122, 2010. They extended a queue based scheduling method to massively parallel computing architecture, while performing measurements by a simulator, especially dedicated to traffic between L2 to L1 caches and between DRAM (Dynamic Random-Access Memory) to L2 cache. Their implementation relies on submitting rays in batches corresponding to a rectangle on the screen: 256x256, 256x256, 512x128, and on ray ordering in a batch based on a 6D Morton order (origin and direction). This was compared with random ray ordering, and did not show any benefit of ray reordering with respect to the latter.

A possible explanation of that result is that the tested architecture was relying on a presumed access by each L1 cache in a warp to multiple cache lines per clock, while it has been later pointed out (see Wodniok et al. above) that current hardware does not allow such capabilities.

As a matter of fact, tracing secondary unorganized rays through a scene, especially in combination with a spatial acceleration structure such as BVH, leads to severe cache misses. This is due in particular to random memory in BVH, cache misses being produced by incoherent BVH node fetches. Such a situation has direct impact on rendering performances, due to bulky required accesses to a GRAM (Graphics Random Access Memory) for retrieving appropriate data.

## 3. Summary

The purpose of the present disclosure is to overcome at least one of the disadvantages of the prior art, by making possible a significant reduction of cache misses on the ground of stochastic ray tracing with respect to the state of the art, including possibly in combination with spatial acceleration structures such as BVH.

More generally, a purpose of the present disclosure is an efficient method for rendering computations, especially directed to secondary rays.

In this respect, the present disclosure relates to a graphics processing device configured to participate in rendering at least one image including a set of pixels and representing a 3D scene. The 3D scene includes surface elements having light interaction features, each of the pixels being constructed from light contributions corresponding to rays coupling that pixel and the surface elements in function of at least those light interaction features.

The graphics processing device is configured to work with memory resources adapted to store at least ray data representative of ray directions of those rays.

The graphics processing device is further configured to work with at least one computation processing circuit able to process the pixels by using the ray data.

In accordance with an aspect of the present principles, the memory resources comprising memory elements respectively associated with the pixels, the graphics processing device includes a ray ordering module able to order the rays in each of the memory elements and for at least one of the surface elements, by means of an ordering method applied to those rays in function of the ray data representative of those ray directions in that memory element. The ordered rays are available to the at least one computation processing circuit in processing the pixels.

The graphics processing device of the present disclosure is to be understood preferably as an apparatus, or a physical part of an apparatus, designed, configured and/or adapted for performing the mentioned functions and produce the mentioned effects or results. In alternative implementations, however, it is embodied as a set of apparatus or physical parts of apparatus, whether grouped in a same machine or in different, possibly remote, machines. In the latter case, the graphics processing device of the invention amounts to a system.

The modules of this graphics processing device are to be understood as for them as functional entities rather than material, physically distinct, components. They can consequently be embodied either as grouped together in a same tangible and concrete component, or distributed into several such components. Also, each of these modules is possibly itself shared between at least two physical components inside the device.

In addition, the modules are implemented in hardware, software, firmware, or in a mixed form thereof as well.

As a whole, the modules are preferably embodied within at least one processor of the device.

The terms "adapted" and "configured" are further used in the definition of the invention as broadly encompassing initial configuration, later adaptation or complementation of the device, or any combination thereof alike, whether effected through material or software means (including firmware).

The image represents a 3D scene according to multiple elementary points of view associated respectively with the pixels.

The light interaction features of the surface elements typically include characteristics relevant to reflection, refraction, diffraction, scattering, absorption and/or fluorescence properties.

In terms of 3D rendering, this is advantageously enshrined in the wording "scattering", which has then a generic meaning, and thereby encompasses reflectance and transmittance aspects. The light interaction features are then preferably embodied through BxDF functions (Bidirectional x Distribution Functions) describing the way in which light is scattered by a surface, as is well known by persons skilled in the art.

The broadest-range corresponding function is then BSDF (Bidirectional Scattering Distribution Function), while in practice separate treatments of reflectance through BRDF (Bidirectional Reflectance Distribution Function) and transmittance through BTDF (Bidirectional Transmittance Distribution Function) is preferred. The BRDF function can itself be considered as based on pure reflectance - for specular surfaces - or as covering other light interaction phenomena leading to resulting reflections, such as subsurface scattering, in which case the related function is rather entitled BSSRDF (Bidirectional Scattering-Surface Reflectance Distribution Function).

The device compliant with the present principles can be appropriate to cover any of the above BxDF functions, taken separately or in combination.

The "coupling" by a ray between a pixel and a surface element means that the ray provides contributions to the image rendering at the pixel, as being originating from the surface element. Those contributions are preferably indirect, the rays being then secondary rather than primary. Also, the term "originating" here is to be understood in its physical and not computational meaning, insofar as the rays are advantageously traced starting from the pixels rather than from the surface elements, in the frame of rendering.

The memory resources can be available from any kind of appropriate storage means, which can be notably a RAM (Random Access Memory) or an EEPROM (Electrically-Erasable Programmable Read-Only Memory) such as a Flash memory, possibly within an SSD (Solid-State Disk).

The computation processing circuits are preferably multiple, and consist advantageously in processing cores of at least one GPU. Their number in each GPU can notably range from a few ones to several hundreds (e.g. 300). In particularly appropriate embodiments of the device according to the invention, the computation processing circuits are then exploited for parallel processing of the pixels, a high number of cores being particularly appropriate then.

In such embodiments, as will be familiar to a skilled person, threads are concurrently executing a same kernel in parallel in respective processing cores for respective pixels, each thread being dedicated to a pixel, and the threads are grouped into thread blocks (which can include various numbers of threads) sharing common cache memory. This cache memory is typically an L1 cache.

At a larger scale, thread blocks are grouped into thread grids or thread warps (which can include various numbers of blocks, and thus of threads), local memory data being commonly available to the threads in a same warp.

A GPU can include itself several warps, thereby providing potentially as a whole a high number of threads.

For sake of pure illustration, a GPU in a specific embodiment comprises 24 warps, each of which including 4 blocks of 8 threads - which makes 768 threads in the GPU. In another specific embodiment, the GPU comprises a unique warp including 16 blocks of 32 threads - which amounts to 512 threads in the GPU.

According to particular characteristics, the graphics processing device of the invention includes one or several GPUs, which comprise the computation processing circuits exploiting the ordered rays. In alternative embodiments, the device does not include the GPUs but is configured for cooperating with them.

The memory elements respectively associated with the pixels are preferably associated with respective specific determined parts of the memory resources. In alternative embodiments, they are set dynamically during processing, according to memory management processing known to skilled persons.

The memory elements are advantageously arranged within one or several dedicated memory spaces, such as buffers, each of which is mirroring the pixel layout in the image to be rendered. Straightforward access is advantageously provided to the memory elements within the dedicated memory spaces.

Those memory spaces are advantageously shaped as 2D storing spaces - i.e. arrays - but can also be possibly linearly designed. They are preferably multiple - e.g. 8 buffers, each memory element being then formed from respective parts thereof. Accordingly, the dedicated memory spaces can be considered as forming a global memory space, which is divided into a number of parts, each of which is associated with one pixel of the image. Alternatively, a unique dedicated memory space is used for the memory element.

In advantageous embodiments involving GPUs, the latter comprises local memory for per-thread data, and shared memory, including cache memory, such as L1 and L2 caches, for low-latency access to data. According to particular characteristics, the L1 caches are respectively associated with blocks of threads, while L2 caches are respectively associated with warps. According to other characteristics, the L2 caches are globally available for the set of warps in a GPU.

By contrast, additional background memory resources are available external to the GPUs, such as notably in the form of one or several GRAM - which can be available in a graphics card together with the GPUs. This is subject to higher-latency accesses via buses. The GRAM itself comprises for instance a set of DRAMs.

Then, the less accesses to GRAM or even to L2 caches are necessary, thanks to relevant memory management with L1 caches, the quicker the processing operations are. As is apparent from the present description, the graphics processing device of the invention can be able to offer such a major asset.

In preferred embodiments, the ray directions exploited in the graphics processing device of the invention are pre-computed random directions for secondary rays, obtained from stochastic or distributed ray tracing.

The ray data representative of ray directions, which are stored in the memory elements of a graphics processing device compliant with the invention, correspond preferably to relative ray directions, with respect to the corresponding surface elements (which is, for each ray direction, the surface element from which the ray having the ray direction is originating, that ray coupling that surface element and the pixel associated with the considered memory element). More precisely, they are advantageously represented by spherical coordinates with reference to directions normal to the surface elements.

Accordingly, the ray ordering module is preferably adapted to order the rays in each of the memory elements for several surface elements, rather than for a single one. Indeed, the fact that the rays directions are referred to in a relative way, with respect to the surface elements, make it consistent and efficient to consider them globally together. This amounts to relating them to a common virtual surface element. The number of surface elements processed in each of the memory elements depends on memory considerations, which typically involves the size of involved buffers.

Alternatively, the effective ray directions are used for ordering instead of the relative ray directions. This solution is less appropriate for taking several surface elements into account with the same memory element, so that rather one single surface element is then exploited for the ray ordering.

The number of rays associated with a memory element depends on memory and computation efficiency considerations. In this respect, as mentioned above, the memory elements are advantageously based on buffers exploited for the storage of ray data, hereinafter referred to as ray buffers. Also, a set of ray buffers is preferably exploited for each of the memory elements, those ray buffers being thereby associated with a frame buffer exploited for the image rendering.

The more ray buffers are included in such a set, the more efficiency is potentially obtained downstream, thanks to ray ordering on a bigger number of rays. On the other hand, this also requires more memory resources, and the ray ordering itself proves more demanding in computation resources.

In specific implementations offering a good trade-off, each ray buffer is adapted to the storage of ray data for 8 or for 16 rays by pixel (thus for each memory element), and 4 or 8 such ray buffers are taken together for ray ordering. This is considered to offer a good low storage coherent ray buffer management.

The rays ordered by the graphics processing device are available to the computation processing circuits, this making it possible to obtain significant improvements in rendering efficiency. This can be especially most valuable in case of parallel processing by the computation processing circuits, notably with SIMD computing.

Indeed, insofar as it is taken full advantage of the features of the graphics processing device of the invention, the locality of ray intersections can be significantly enhanced for each memory element. This can reduce cache misses accordingly - especially at the level of the L1 caches - by decreasing scattered data accesses. In this way, accesses to higher level caches and to a GRAM can possibly be significantly reduced.

Namely, a consistency of progression between the rays can then be globally obtained for any given pixel within each ray buffer, and beyond this ray buffer, within each set of ray buffers when associated together for ray ordering. This reflects into a locality or rays across pixel threads, at the scale of thread blocks and thread warps.

The graphics processing device of the invention is particularly interesting when focused on secondary rays, the primary rays being generated by rasterization - through differed or hybrid rendering. It is then liable to allow quite efficient interactive rendering of ambient occlusion or one bounce indirect lighting. Advantageous applications thereof are interactive VFX (Visual Effects) pre-visualization of lighting effects and/or GPU accelerating rendering of production VFX for the movie industry.

The potentially quite high efficiency improvement in rendering processing is resulting from the facts that primary rays in a scene are generally coherent together, and that a group of pixels processed by a warp of threads has high probability to correspond to points on a same surface. Accordingly, the evaluation of secondary rays through pre-computing is liable to be significantly accelerated. This is particularly true with the use of compact ray buffers for storing pre-computed secondary rays, as specified above.

It deserves also being noted that the graphics processing device of the invention can be implemented as compatible with any ray-tracing systems or deferred rendering engines. Also, it can possibly provide in a general way a fast solution suitable for real-time rendering or pre-visualization of complex lighting effects.

As a whole, a significantly higher data bandwidth can be potentially gained.

The graphics processing device of the invention further makes possible easy implementation on graphics hardware and/or on production renderers.

In spite of the particular relevance to parallel computing, other implementations are also covered. This includes alternative multiprocessing embodiments - relying on several cores but not necessarily executing the same task in parallel - and multitasking embodiments - one single computation processing circuit being exploited through time slices between different tasks.

Namely, though providing more limited prospects than parallel processing (especially through SIMD), the graphics processing device of the invention can even then offer some interesting applications. In particular, buffer data resulting from ray ordering can be kept for next operations involving neighbouring pixels, which amounts to differing the synergies obtained directly with parallel computing.

Also, in particularly advantageous embodiments, the local ordering of ray data is exploited for enhancing the precision of representation, as will be developed below.

As concerns the technical contributions of the graphics processing device to the state of the art, potentially offering the advantages above or at least part of them (depending on the implementations), it deserves noting that none of the cited references discloses or suggests a local ordering of rays through dedicated memory elements and based on the ray directions. In fact, in the light of the known documents and bulky works dedicated to rendering for decades, proceeding in this way appears quite surprising.

In particular, ray reordering is usually considered at a global scale rather than at a local scale - presently a pixel and one or several surface elements. Likewise, global storage is usually considered for ray reordering rather than small storage entities - presently made possible via the memory elements (as illustrated above with the ray buffers).

In an advantageous embodiment, the memory elements are respectively available from texels forming a matrix of those texels.

This unexpected use of the texels proves particularly advantageous, notably due to the fact that they offer storage capacities particularly relevant to the graphics processing device of the invention. Also, the matrix of texels proves an appropriate form for mirroring the frame buffer and thereby offering the desired memory arrangement.

Typically, an RGBA buffer (Red Green Blue Alpha) can offer a buffer of 128 bits per pixel, which enables to store 8 rays while making it a "ray buffer" insofar as the ray directions are represented by two 8-bits values (corresponding to the spherical coordinates with respect to the associated surface elements).

Advantageously, the ordering method applied to the rays includes attributing respective coding values to those rays in function of the ray directions, the ray directions being relative with respect to the surface element(s) corresponding to those rays.

In this respect, the ray directions having spherical coordinates, the ordering method relies advantageously on a space filling curve preserving a locality of data, applied to the spherical coordinates.

Such a space filling curve can be obtained notably through a Morton code (also called Z-order), or from Hilbert R-trees or Moore curves. A simple way to proceed is to apply it to the two-dimensional data distributed with respect to a polar and an azimuth angle of the ray directions, relative to the concerned surface element(s).

A particular attention is paid hereinafter to the precision of representation of the ray directions, the latter being specified in spherical coordinate systems - relying on polar and azimuth angles - relative to the corresponding surface elements.

Namely, quite especially in global illumination techniques, the choice of a good sampling for the secondary ray directions is crucial to reduce the variance and obtained reduced noise images. Notably, Monte Carlo methods exploited in stochastic ray tracing use weighted distribution tending to optimal sampling. They take into account Lambert's law for perfect diffuse surfaces and energy lobe in reflection directions for specular surfaces. This leads to sampling distributions to which the following advantageous embodiments are particularly well adapted, though not being limited thereto.

Regarding a first particular characteristic pertaining to the precision of representation, the ray directions of the rays being relative with respect to one of the surface elements corresponding to those rays, and having a polar angle offset with respect to a reference direction with respect to that surface element, the graphics processing device further includes a polar sampling module adapted to provide part of the ray data so that those ray directions have a precision of representation decreasing with the polar angle offset.

As can be understood, this representation adjustment is made for any memory element upstream of ray ordering, and separately for each surface element.

The reference direction depends on the light interaction features of the surface element. In preferred implementations: if the surface is dealt with as perfectly diffuse, the reference direction is given by a normal to the surface element; if the surface is dealt with as specular, the reference direction is given by a reflection direction of an incoming ray; if the surface is dealt with as refractive, the reference direction is given by a refraction direction of an incoming ray.

The obtained improvement in representation quality, in particular in combination with stochastic ray tracing, can be explained by the fact that most of the sampling distribution resulting from associated Monte Carlo method is oriented towards the normal to the surface element (for diffusion) or the reflected ray (for specular reflection).

This arrangement benefits from the processing of ray directions according to the invention, which is made in relation with surface elements, especially for embodiments of the graphics ray device that rely on ray buffer(s).

According to a particular implementation of the polar sampling module, it is able to apply a transforming function to a precision domain of the polar angle offset, that transforming function enabling to increase the precision of representation when the polar angle offset is smaller.

Namely, in this implementation, the precision domain is expanded for low polar angle offset (towards normal or reflected direction), and compressed for high polar angle offset. This transforming function can take the form of a parameterized power function exploited for encoding, and used in combination with a pre-computed look-up table for decoding - in order to save execution cycles.

Regarding a second particular characteristic pertaining to the precision of representation, for each of the memory elements, the ray directions of the rays are relative with respect to the surface element(s) and have an azimuth angle with respect to a normal to the surface element(s) with an angular precision of representation. Then, the graphics processing device further includes an azimuth refinement module adapted to introduce for each of the memory elements at least one angle shift to the azimuth angle of the ray directions of the ordered rays, the angle shift(s) being strictly bounded by the angular precision of representation and being applied periodically to the azimuth angle of the ray directions of the ordered rays.

As can be understood, this representation adjustment is made for any memory element downstream of ray ordering, and commonly for the surface elements associated with this memory element. This is preferably effected just before performing ray intersections in the concerned directions, at the stage of adding light contributions to the involved image pixel. Of course, computing the ray contributions goes through the determination of the effective ray directions, from the relative ray directions exploited in the previous steps.

This azimuth refinement module is potentially able to provide a significant improvement in the visual perception of representation, without disturbing the positioning of the ray directions. Indeed, on one hand, the angle shifts are small enough to preserve the positions of the ray directions within the angular precision of representation. On the other hand, the angle shifts prove to be adapted to introduce some refinement in the viewer perception, particularly by means of the periodic application.

This achievement appears especially surprising, because the angle shifts are basically introduced artificially. There is however noted in practice a significant improvement in the viewer perception.

This embodiment can have particularly fruitful synergies with the ray ordering. Indeed, the angle shifting periodicity is applied to ordered rays, which have a globally progressive evolution in azimuth - even though not strictly regular, since the polar angle is also taken into account in the ray ordering. Consequently, the shifting periodicity is reflected in a relatively global regularity pertaining to the resulting representation of the ray intersections.

The number of different angle shifts, their values and their periodicity can be chosen in function of various parameters, including the additional computing time and the degree of precision improvement.

Advantageously, the values of the angle shifts are regularly partitioning the angular precision of representation of the azimuth angle. For instance, if a single shift is used, its value is then half the angular precision, while if three different angle shifts are exploited, they are respectively worth ¼, ½, and ¾ of the angular precision.

Advantageously, part of the ray directions are not submitted to any azimuth shifts, the azimuth angle thereby being left unchanged.

Also, it is advantageous to increment regularly the azimuth angle shifts, from one ray to the next, starting from no shift and adding increasing shift values, until the maximum shift is reached and the next azimuth comes back to "no shift". It is then desirable that the number of angle shifts, plus one, is dividing the number of rays for the memory element, so that the shifting regularity can be maintained over a full circumference - on which the azimuth angle is ranging.

Alternatively, the azimuth angle shifts are distributed otherwise, preferably based on a predetermined scheme recorded in a look-up table. This distribution is advantageously random. The latter arrangement is liable to strengthen the illusion of realistic precision for the viewer, since this provides some additional (though artificial) distance with a feeling of regular distribution.

In a particularly effective implementation, the ray directions being grouped for the memory element into a number of basic ray sets, that number being called the storing depth, the azimuth refinement module is configured to apply the angle shift(s) to the azimuth angle with a periodicity equal to the storing depth for each of those angle shifts, and to interleave those angle shifts.

The basic ray sets can be considered in relation to the above mentioned sets of ray buffers, parts of which form the memory elements associated with the pixels. Namely, the present storing depth amounts precisely to the number of ray buffers in one set. Also, "interleaving" the angle shifts means selecting all the available angle shifts when going through the successive ordered rays, with the additional inclusion of "no shift", and repeating the same operation periodically in the same selection order for the angle shifts. As mentioned above in a more general frame, it is advantageous that the angle shifts are regularly increased when going through the successive ordered rays, are regularly partitioning the angular precision of representation of the azimuth angle, and that their number plus one is dividing the number of rays for the memory element.

This achievement proves particularly satisfying in terms of apparent precision improvement over the absence of angle shifts. One of the possible explanations for it is that the choice of the storing depth for the periodicity of the angle shifts is well suited to the precision available to the azimuth representation, especially considering a predetermined number of rays in each ray set. Indeed, having a higher number of rays involve higher ray concentration over the azimuth circumference, hence more sensitivity to smaller offsets.

Preferably, the rays are chosen and processed according to a stochastic ray tracing method, those rays being secondary rays corresponding to indirect illumination in rendering the image, and being spawned from scattering on the surface elements.

The term "scattering" is considered here in its broadest sense, as mentioned above. The graphics processing device is anyway advantageously applied more specifically to reflectance and/or to perfect diffusion representations.

Also, as specified above, the graphics processing device is preferably provided for threads dedicated respectively to the pixels and executed respectively in parallel by multiple computation processing circuits, the threads being grouped into thread blocks, each of the thread blocks sharing a common cache memory of level 1 for the threads.

Another object of the invention is a GPU comprising computation processing circuits as processor cores and including a graphics processing device according to the invention.

Namely, though the graphics processing device of the invention can include GPUs, conversely, a GPU can also encompass the functionalities of the device. In preferred embodiments, those functionalities are implemented through electronic circuits of the GPU.

Preferably, the 3D scene comprising geometric objects having the surface elements, that GPU further includes a spatial acceleration module, configured to group those objects according to a spatial acceleration scheme with hierarchization.

That spatial acceleration module advantageously relies on BVH, LBVH (Linear BVH), BSP trees (Binary Space Partitioning) - notably k-d trees - or Octrees structures. Such structures map very well on GPU memory with good locality of data.

Within such implementation involving the graphics processing device of the invention, the locality of data in a warp of threads can be significantly improved in two ways: both through locality in accessing a random ray direction, and through locality of spatial acceleration node fetches - particularly first node fetches.

The present principles also concerns a memory structure for graphics processing configured to participate in rendering at least one image including a set of pixels and representing a 3D scene, the 3D scene including surface elements having light interaction features. Each of the pixels is constructed from light contributions corresponding to rays coupling that pixel and the surface elements in function of at least those light interaction features.

The memory structure stores at least ray data representative of ray directions of those rays.

According to the present principles, the memory structure comprising memory elements respectively associated with the pixels, the rays are ordered in each of the memory elements and for at least one of the surface elements, by means of an ordering method applied to those rays in function of the ray data representative of those ray directions in that memory element.

The memory structure is preferably adapted to being used by a graphics processing device or a GPU compliant with the invention.

The present disclosure further pertains to a process for graphics processing adapted to participate in rendering at least one image including a set of pixels and representing a 3D scene, the 3D scene including surface elements having light interaction features. Each of those pixels is constructed from light contributions corresponding to rays coupling that pixel and the surface elements in function of at least those light interaction features.

The process uses memory resources storing at least ray data representative of ray directions of the rays.

The process further involves at least one computation processing circuit processing the pixels by using the ray data.

According to the present principles, the memory resources comprising memory elements respectively associated with the pixels, the process for graphics processing includes ordering the rays in each of the memory elements and for at least one of the surface elements, by means of an ordering method applied to those rays in function of the ray data representative of those ray directions in that memory element. Those ordered rays are available to the computation processing circuit(s) in processing the pixels.

The process for graphics processing is preferably executed by means of a graphics processing device or a GPU compliant with the invention.

In addition, the present disclosure concerns a computer program for graphics processing, comprising software code adapted to perform ray ordering according to a process compliant with the invention.

This computer program can have any form, and notably be embedded in a graphics processing device or a GPU according to the invention. In alternative embodiments, it is available separately from an apparatus, and configured to be implemented within that apparatus so as to allow the execution of the process for graphics processing compliant with the invention. This can be done either via a tangible support carrying the computer program or via local or remote downloading. In particular, the computer program can be available as flashing firmware, enabling to update a graphics processing apparatus.

In still other embodiments, the computer program is configured to be exploited in combination with an apparatus for 3D rendering, but remotely, notably through online operations.

The present disclosure further pertains to a non-transitory program storage device, readable by a computer, tangibly embodying a program of instructions executable by the computer to perform a process for graphics processing compliant with the invention.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

4. List of figures

The invention will be better understood, and other specific features and advantages will emerge upon reading the following description, the description making reference to the annexed drawings wherein:

- figure 1 diagrammatically shows a graphics processing apparatus comprising the features of a graphics processing device according to the invention;
- figure 2 is a block diagram of a GPU included in the graphics processing apparatus of figure 1, itself comprising the features of a graphics processing device according to the invention;
- figure 3 represents the parallel computing and memory management functionalities of the GPUs of the graphics processing apparatus of figure 1, notably the GPU of figure 2;
- figure 4 illustrates the scattering of secondary rays in a scene, representative of a situation to be processed by the graphics processing apparatus of figure 1;
- figure 5 is a compact schematic view showing a ray buffer layout exploited by the graphics processing apparatus of figure 1, in relation with an image and with a thread grid corresponding to the parallel computing of the GPU as illustrated on figure 3;

- figure 6 represents a set of ray directions, as exploited through the ray buffer layout of figure 5;

- figure 7 shows the scattering of an incoming ray on a perfectly diffuse surface, to be processed by the graphics processing apparatus of figure 1;

- figure 8 represents a sampling distribution corresponding to the perfectly diffuse surface of figure 7;

- figure 9 shows the scattering of an incoming ray on a specular surface, to be processed by the graphics processing apparatus of figure 1;

- figure 10 represents a sampling distribution corresponding to the specular surface of figure 9;

- figure 11 is a graph showing a parameterized power function used by the graphics processing apparatus of figure 1, for efficiently processing the polar angle of ray directions corresponding to the scattering of figures 7 to 10;

- figure 12 illustrates the parallel processing of scattered secondary rays in a scene, failing the use of the graphics processing apparatus of figure 1;

- figure 13 illustrates the parallel processing of scattered secondary rays in a scene, with the use of the graphics processing apparatus of figure 1;

- figure 14 is a flow chart showing a particular execution mode of the graphics processing method of the invention, by means of the graphics processing apparatus of figure 1.

## 5. Detailed description of embodiments

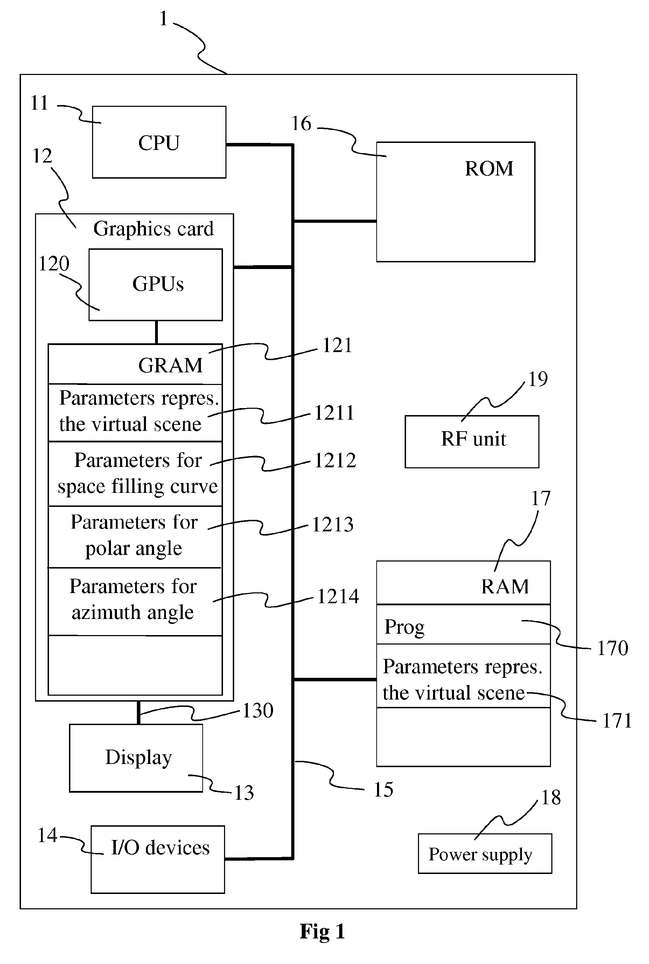

The present disclosure will be described in reference to a particular hardware embodiment of a graphics processing device, as diagrammatically shown on **Figure 1** for a graphics processing apparatus 1.

The apparatus 1 corresponds for example to a personal computer (PC), a laptop, a tablet, a smartphone or a games console - especially specialized games consoles producing and displaying images live.

The apparatus 1 comprises the following elements, connected to each other by a bus 15 of addresses and data that also transports a clock signal:

- a microprocessor 11 (or CPU) ;
- a graphics card 12 comprising:

  • several Graphical Processor Units (or GPUs) 120,
  • a Graphical Random Access Memory (GRAM) 121;

- a non-volatile memory of ROM (Read Only Memory) type 16;
- a Random Access Memory or RAM 17;
- one or several I/O (Input/Output) devices 14 such as for example a keyboard, a mouse, a joystick, a webcam; other modes for introduction of commands such as for example vocal recognition are also possible;

- a power source 18 ; and
- a radiofrequency unit 19.

The apparatus 1 also comprises a display device 13 of display screen type directly connected to the graphics card 12 to display synthesized images calculated and composed in the graphics card, for example live. The use of a dedicated bus to connect the display device 13 to the graphics card 12 offers the advantage of having much greater data transmission bitrates and thus reducing the latency time for the displaying of images composed by the graphics card. According to a variant, a display device is external to the device 1 and is connected to the apparatus 1 by a cable or wirelessly for transmitting the display signals. The apparatus 1, for example the graphics card 12, comprises an interface for transmission or connection adapted to transmit a display signal to an external display means such as for example an LCD or plasma screen or a video-projector. In this respect, the RF unit 19 can be used for wireless transmissions.

It is noted that the word "register" used in the description of memories 121, 16, and 17 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 11 loads and executes the instructions of the program contained in the RAM 17.

The random access memory 17 notably comprises:

- in a register 170, the operating program of the microprocessor 11 responsible for switching on the apparatus 1,
- parameters 171 representative of the scene (for example modelling parameters of the object(s) of the scene, lighting parameters of the scene).

The algorithms implementing the steps of the method specific to the invention and described hereafter are stored in the memory GRAM 121 of the graphics card 12 associated with the apparatus 1 implementing these steps. When switched on and once the parameters 171 representative of the environment are loaded into the RAM 17, the graphic processors 120 of the graphics card 12 load these parameters into the GRAM 121 and execute the instructions of these algorithms in the form of microprograms of "shader" type using HLSL (High Level Shader Language) language or GLSL (OpenGL Shading Language) for example.

The random access memory GRAM 121 notably comprises:

- in a register 1211, the parameters representative of the scene,
- in a register 1212, appropriate parameters for space filling curve, the use of which will be specified below,
- in register 1213 and 1214, appropriate parameters for respectively polar and azimuth angles of ray directions, the exploitation of which will also be explained below.

According to a variant, at least some of the parameters for space filling curve and for angles are stored in the RAM 17 and processed by the microprocessor 11. This variant however causes greater latency time in the composition of an image comprising a representation of the environment composed from microprograms contained in the GPUs 120 as the data must be transmitted from the graphics card to the random access memory 17 passing by the bus 15, for which the transmission capacities are generally inferior to those available in the graphics card for transmission of data from the GPUs 120 to the GRAM 121 and vice-versa.

According to another variant, the power supply 18 is external to the apparatus 1.

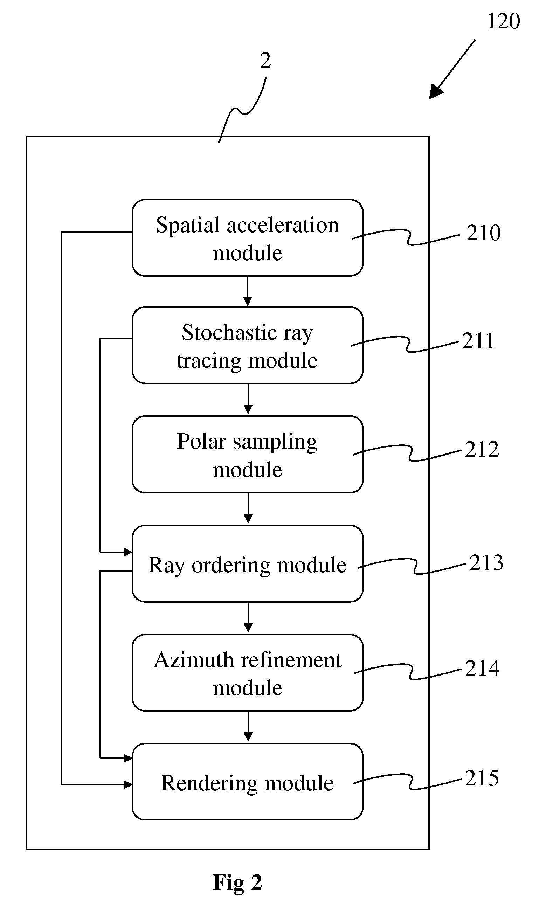

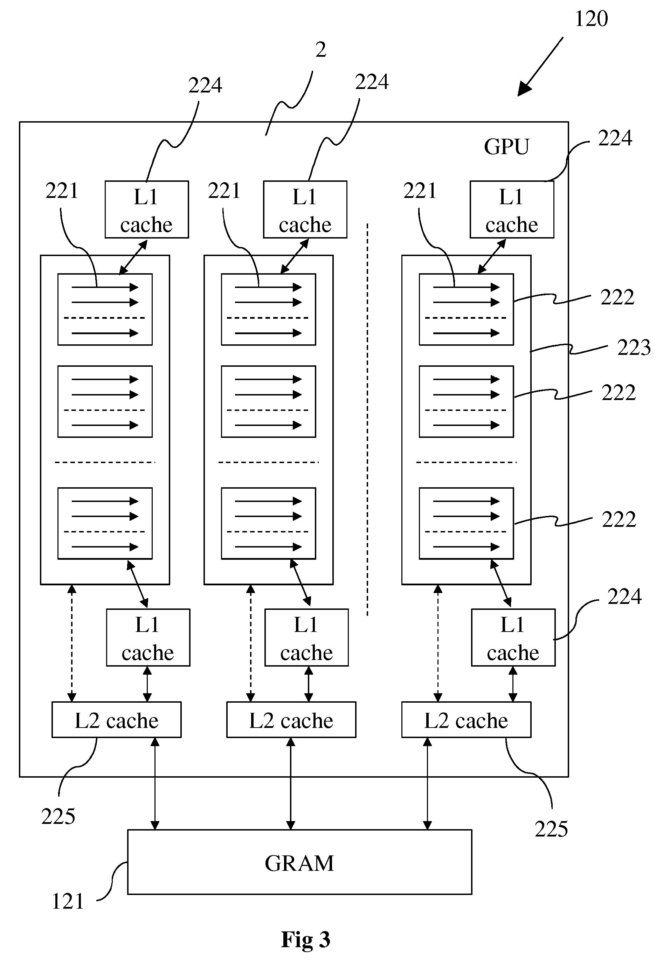

The GPUs 120 are more detailed on **Figures 2 and 3,** which illustrate complementary aspects thereof.

**Figure 2** is dedicated to some functional aspects specific to the graphics processing apparatus 1. The represented blocks are purely functional entities, which do not necessarily correspond to physically separated units. In particular, they can be implemented in one or several integrated circuits within the GPUs 120.

The GPUs 120 can form a distributed GPU ray tracing system, involving GPU computing kernels, and possibly relying on parallel computing architecture such as notably CUDA (Compute Unified Device Architecture), OpenCL (Open Computing Language) or Compute Shaders.

One of the GPUs 120, numbered GPU 2, includes:

- a module 210 for spatial acceleration, such as BVH; alternatively, LBVH, BSP trees such as notably k-d trees, or Octrees structures are implemented, several spatial acceleration schemes being possibly available in same GPU 2;
- a module 211 for stochastic ray tracing, yielding multiple rays having respective ray directions;
- a module 212 for polar angle sampling applied to those ray directions;
- a module 213 for ordering those rays in function of those ray directions;
- a module 214 for refining the azimuth angle corresponding to those ray directions, once ordered; and
- a rendering module 215, proceeding with the final steps of performing ray intersections and adding light contributions scattered towards a viewing direction.

As will appear more clearly below, the relationships between the modules are mainly as follows: the stochastic ray tracing module 211 has an upstream function, and feeds the polar sampling module 212 and the ray ordering module 213. In addition, the azimuth refinement module 214 is activated in cooperation with the rendering module 215 for dealing with the outputs of the ray ordering module 213, so as to constitute an image pixel by pixel, through parallel computing. For ray tracing as well as for rendering, the spatial acceleration module 210 is exploited in relation with the hierarchical bounding of objects in the concerned scene.

Same functionalities can be implemented in the other GPUs 120 of the graphics processing apparatus, as well.

**Figure 3** is more precisely devoted to the parallel mechanisms implemented in the GPU 2. Blocks 222 of threads 221, respectively dedicated to pixels of an image and executed in parallel by a same kernel, are themselves grouped into warps or grids 223.

Each thread 221 is allotted a small local memory (not represented), while the threads 221 of a same block 222 are sharing a first-level cache memory or L1 cache 224. The warps 223 are themselves provided with second-level cache memories or L2 caches 225 through the L1 caches 224, which are communicating with the GRAM 121 via dedicated buses. The access to data contained in L2 caches 225 by the threads 221 across blocks 222 is slightly slower than their access to data in L1 caches 224. Both are however significantly faster than accesses to the GRAM 121.

The GPU 2 is working on the ground of SIMD parallel programming, by instantiating a kernel program on each of the warps 223, such as for instance a ray intersection. This makes the threads 221 execute concurrently this same kernel, which proves particularly well suited for ray-tracing applications.

When a thread 221 request data from a texture or a buffer not available in the L1 or L2 caches, the GPU 2 prefetches a cache block making local memory data available for other threads 221 in the same warp 223. In this respect, locality of data accessed by a group of threads 221 in a warp 223 is critical to good data bandwidth, while scattered data accesses affect performances.

Tracing secondary unorganized rays through the scenes is, as a general observation, a cause of severe cache misses due to random memory in the BVH, such cache misses being produced by incoherent BVH node fetches.

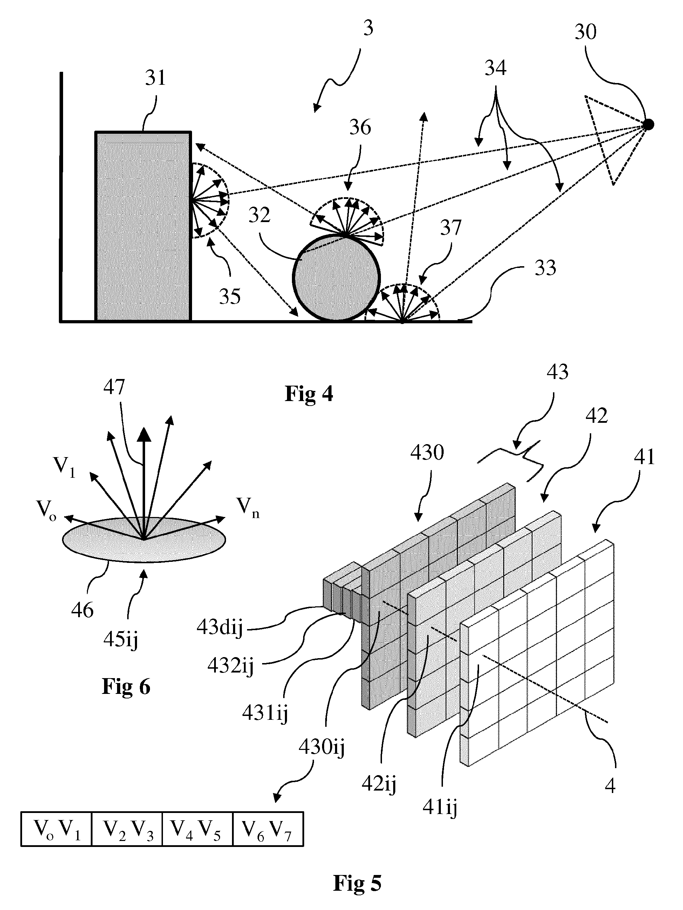

This hurdle, significantly alleviated thanks to the CPUs 2 of apparatus 1, is illustrated on **Figure 4,** which shows illustratively the scattering of primary rays in a scene 3. The latter is viewed from a point of view 30 (also called camera field of view) and corresponds for example to a virtual scene. It comprises several virtual objects, i.e. a first object 31 and a second object 32, further to a ground surface 33 - also considered as an object from light interactions prospects.

The objects 31 and 32 are modelled according to any method known to those skilled in the art, for example by polygonal modelling, in which the model is assimilated with a set of polygons (mesh elements) each defined by the list of summits and edges that compose it, by NURBS (Non uniform rational basic spline) type curve modelling in which the model is defined by a set of curves created via control vertices, by modelling by subdivision of surfaces. By virtual object is understood any virtual representation (obtained by modelling) of an object (real or fictitious) composing a real environment / real scene (for example the ground, a house or a house front, a person, a car, a tree, that is to say any element composing an environment such as a part of a house, a street, a town, the countryside, etc.) or an imaginary element.

Each object 31, 32, 33 of the scene 3 is specified by a surface covering it, the surface of each object having scattering features, which can include reflectance properties (corresponding to the proportion of incident light reflected by the surface in one or several directions) and transmittance properties (corresponding to the proportion of incident light transmitted by the surface in one or several directions). The reflectance properties are considered in a broad sense, as encompassing subsurface scattering phenomena (in which light penetrates the surface, is scattered by interacting with the material and exits the surface at a different point).

The present embodiments are focused on reflections, but in other implementations, transmittance is processed alternatively or in combination, the graphics processing apparatus 1 having preferably capacities for both kinds of light interactions with surfaces.

Primary rays 34 coupling the point of view 30 and the surfaces of the objects 31, 32, 33 are rays having potentially a lighting contribution to an image corresponding to this point of view 30. For ray tracing, they are usually processed as originating from the point of view 30 for merely sake of convenient processing, though the contrary is true in the reality - so that the rays 34 are in fact originating from the objects. The rays 34 incoming on the surfaces of the objects 31, 32, 33 are broadly scattered in various directions, leading to incoherent secondary rays, respectively 35, 36 and 37 for objects 31, 32 and 33.

According to a variant, the scene 41 is a real scene shot by a camera device generating an image and advantageously one or more other images according to different points of view, as to generate a stereoscopic image of the scene.

**Figures 5 and 6** illustrate solutions implemented in the apparatus 1 for significantly reducing GPU cache misses for secondary rays.

**Figure 5** shows a ray buffer layout exploited by GPU 2, in relation with an image currently processed and with a correspondingly running warp 223 of threads 221. More precisely, a frame buffer 41 of an image to be constructed comprises multiple pixels 41 ij (i designating the line number and j the column number in the frame buffer 41). For sake of convenience, the term pixel will be used in what follows for designating both the memory space dedicated to an elementary part of the picture and to the its content. The number of pixels 41 ij in the frame buffer 41 defines the image resolution, the number of lines and of columns being preferably distinct (for example 1024x768 pixels, 1280x720 pixels or 1920x1200 pixels).

Attributes are advantageously associated with each pixel of the frame buffer 41, and comprise for example color information (for example RGB information) and/or the translucent character Alpha of the fragment of the scene associated with a pixel of the image. A fragment advantageously corresponds to a surface element associated with a point of the scene 3, the size of which being equal to the size of a pixel 41 ij of the frame buffer 41 that can be displayed to represent the scene 3 on a display screen.

A fragment of the scene 3 becomes a pixel in the frame buffer 41 if the fragment is visible from the point of view 30 associated with the image. For clarity purpose, an element (for example a point) of the scene 3 will be called a fragment or surface element when positioning in the space of the 3D scene (the world space) and the same element visible from the point of view 30 associated with the image will be called pixel when positioning in the space of the image. Advantageously the fragment is defined by a set of data grouping together one or several of the following data items:

- the rasterization position of the fragment,
- the depth of the fragment at the viewpoint,
- attributes (for example the colour, the texture coordinates),
- the alpha channel representative of the translucent character of the fragment.

To determine whether a fragment of the scene is visible from the point of view 30 of the frame buffer 41, a well-known z-buffer method (also known as z-buffer algorithm) is advantageously used in association with one or more depth maps, in compliance with methods well known by persons skilled in the art.

The frame buffer 41 is mirrored by a thread grid 42, which corresponds to one of the thread warps 223. Namely, it is possible to associate each pixel 41 ij of the image 41 with one of the threads 221 of the thread grid 42, numbered 42ij. The latter is devoted to executing the operations for this pixel 41 ij.

The GPU 2 is especially provided for a third level of correspondence, with a set 43 of buffers. One of these buffers 430, represented on **Figure 5,** comprises multiple elementary memory spaces 430ij, each of which corresponds to a pixel 41 ij. It is exploited for storing pre-computed ray directions V0, V1...V7 of secondary rays coupling this pixel 41 ij and surface elements of the scene, and is accordingly called a ray buffer. Those pre-computed ray directions are advantageously obtained by stochastic ray tracing.

More precisely, the ray buffer 430 is taken from an RGBA 3D texture - or texel. Considering, for example, that each ray direction is given by two 8-bits values, corresponding to respective spherical coordinates, and having a texel capacity of 128 bits, the ray buffer 430 enables to store 8 ray directions (as represented on **Figure 5).**

The above regarding ray buffer 430 is true for all the buffers in the set 43 of buffers, the number of which is called the storing depth of the set 43.

Consequently, for each pixel 41 ij, several elementary memory spaces 430ij, 431 ij, 432ij... 43dij... of respective ray buffers such as 430 are available for storing ray directions, their number being equal to the storing depth of the set of ray buffers. This cumulated available memory space dedicated to a collection of ray directions, which maps with each pixel of the frame buffer 41, is designated below as a memory element.

This layout of ray buffers is accordingly designed to spawn rays in warps 223, each thread 221 being responsible for tracing secondary rays through the scene by querying directions in the ray buffers. Since primary rays in a scene are statistically coherent together, a group of pixels processed by a warp 223 of threads 221 has a high probability to correspond to points on a same surface. This makes the ray buffer layout particularly relevant for providing potentially a dramatic reduction of cache misses, as developed below.

**Figure 6** represents a set of ray directions V0, V1...Vn stored in a memory element corresponding to a pixel 41 ij and referred to a given representation system 45ij, comprising a reference surface 46 and a oriented normal 47 to this surface 46.

The stored ray directions are in fact specified in their relative positioning with respect to the surface 46, rather than in their effective coordinates in the 3D scene. In this respect, several surface elements can be concerned together in one single memory element, their respective surfaces being reported to the reference surface 46.

Also, the ray directions are advantageously determined in the representation system 45ij by means of a polar angle and an azimuth angle. In convenient embodiments, the polar and azimuth angles range respectively from -90 ° to +90 ° and from 0 ° to 360 °.

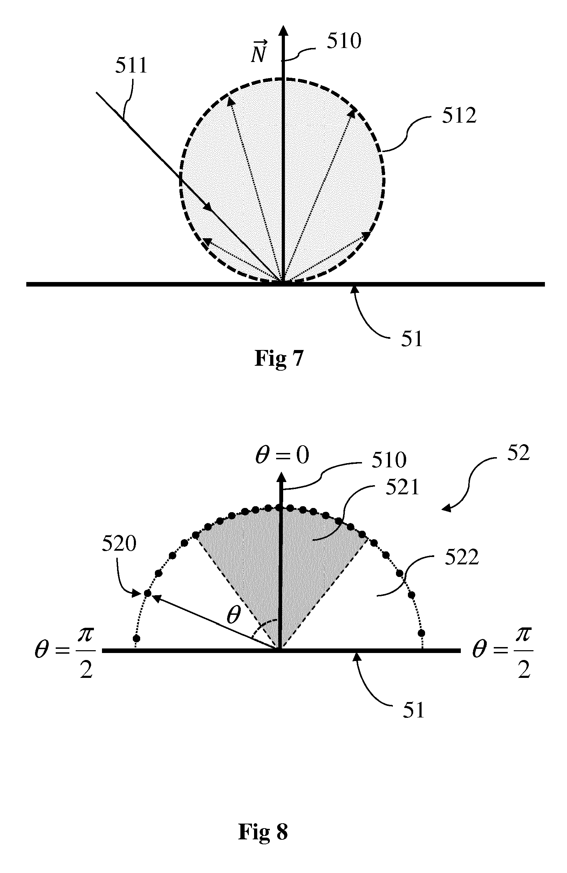

The polar sampling module 212 comprises functionalities for enhancing the polar angles sampling, based on the ray directions available in the ray buffers. They are applied preferably to individual surface elements, having identical light interaction features. **Figures 7 to 11** illustrate the working of this polar sampling module 212.

**Figure 7** shows the scattering of an incoming ray 511 on a perfectly diffuse surface 51 having a normal 510, Lambert's law being applicable. Through scattering at the surface 51, rays have a specific well known distribution 512, symmetric with respect to the normal 510 (the luminous intensity being directly proportional to the cosine of the angle between the normal 510 and an observer's line of sight).

For secondary ray directions generated through a stochastic ray tracing method, as shown on **Figure 8,** the Monte Carlo sampling using weighted distribution leads to a sampling distribution 52 of direction samples 520. It appears that most of this sampling distribution 52 is oriented towards the normal 510, a high density sampling being obtained for a cone 521 closer to the normal 510, and a lower density sampling in the complementary polar angle area 522.

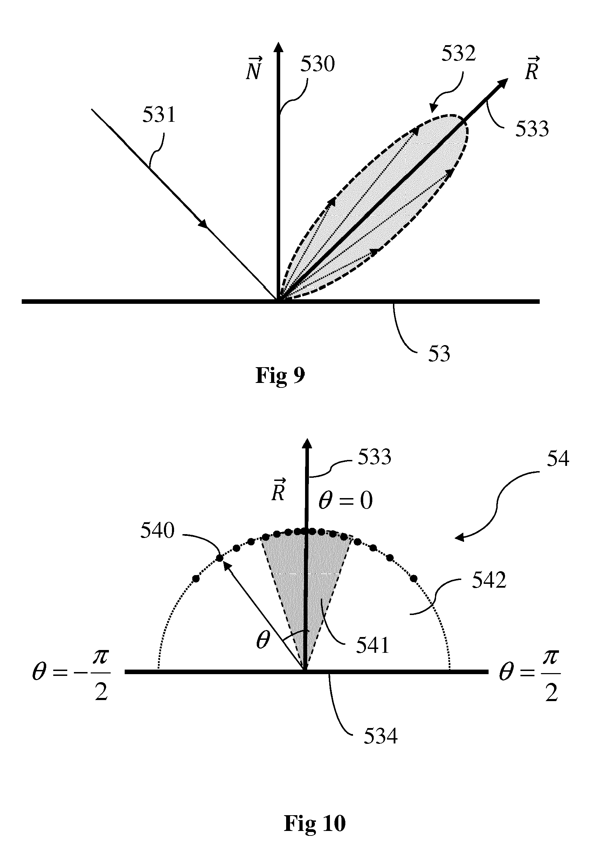

Similarly, **Figure 9** shows the scattering of an incoming ray 531 on a specular surface 53 having a normal 530. Further to reflection at the surface 53, rays have an energy lobe distribution 532 in the reflection direction 533.

For secondary ray directions generated through a stochastic ray tracing method, as shown on **Figure 10,** the Monte Carlo sampling using weighted distribution leads then to a sampling distribution 54 of direction samples 540. It appears that most of this sampling distribution 54 is oriented towards the reflected ray 533, a high density sampling being obtained for a cone 541 closer to this reflected ray 533, and a lower density sampling in the complementary polar angle area 542.

The polar sampling module 212 exploits this heterogeneity of sampling distributions, preferably any of the two situations of perfect diffusion and specular reflections. This is done by means of a parameterized power function, expanding the precision domain for a low polar angle with respect to the normal (perfectly diffusive surface) or to the reflected direction (specular surface), while compressing the precision domain for a high polar angle.

Advantageously, using a normed variable x ranging between 0 and 1 and a parameter N, the parameterized power function is given by an encoding function e(x) equal to: $e(x) = \sqrt[N]{x}$

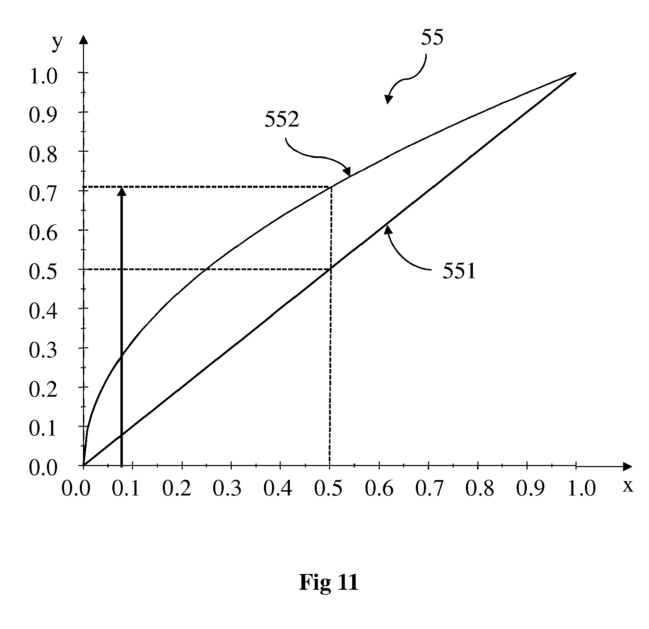

Such a function is visible on **Figure 11** for N = 2, a graph 55 showing the transformation from the straight line 551 to the convex curve 552.

Decoding is performed by taking the inverse of the power function, leading to a decoding function *d* applied to a variable y given by:

$$d(y) = e(x)^N$$

Decoding is then preferably performed by using a lookup in a pre-computed table that maps the polar angle value with entries. Indeed, this saves execution cycles.

The effect of this transformation is to increase the precision in high density area and to reduce precision for low sampling area. This enables to provide an enhanced sampling for the secondary ray directions, which is crucial in reducing the variance and obtaining reduced noise images.

In a specific embodiment, particularly suited to a representation of the polar and azimuth angles with respectively 8 bits values, the power function is encoded on 8 bits.

Another method, described below, enables to improve the representation of azimuth angle likewise. It is applied at a later stage of processing.

Some key aspects of the GPU 2, thus of apparatus 1, are provided by the functionalities of the ray ordering module 213. The latter uses the polar and azimuth angles of the ray directions stored in the memory elements. For each of these memory elements, which corresponds to a given pixel, it proceeds with a reordering of the polar and azimuth values, based on a space filling curve preserving a locality of data, applied to the two dimensions polar angle - azimuth angle.

In a specific advantageous embodiment, this space filling curve corresponds to a Morton code. However, other solutions such as Hilbert R-trees or Moore curves are also valuable.

A linear and local 2D data mapping, between angular values and encoded values, is thus effected, so that the coordinates of ray directions are reordered in ascending sort. For example, for two 8 bits quantized coordinates values, a 16 bits Morton code is executed.

The effect of this implementation is that the reordering groups rays with nearly the same direction, thereby significantly enhancing the coherence between rays spawned in a warp of threads.

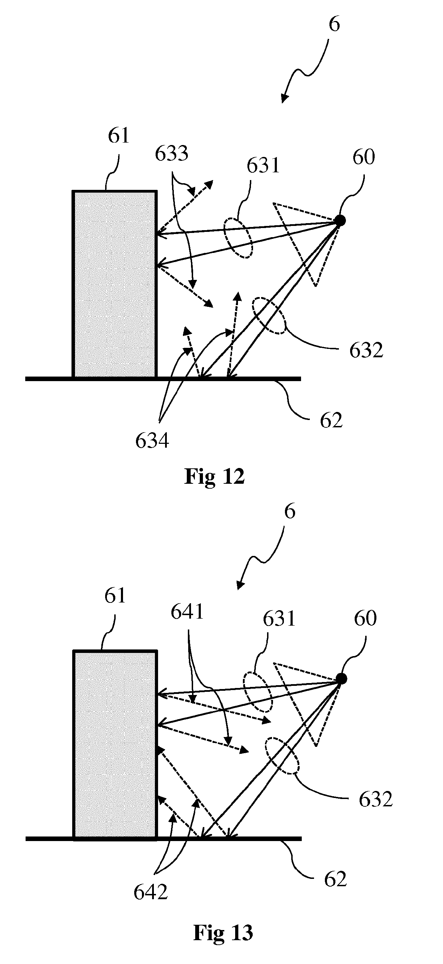

**Figures 12 and 13** are putting forwards the coherence improvements, by representing the parallel processing of scattered secondary rays in a scene, respectively without and with the activation of the ray ordering module 213. A scene 6 comprising objects 61 and 62 (the ground 62 being here considered as an object) is viewed from a point of view 60. Rays are thus directed to surface elements of those objects 61, 62 from the point of view 60, while forming respective groups of rays 631 and 632 corresponding to respective warps 223 of threads 221.

Failing the application of the ray ordering by module 213, as visible on **Figure 12,** the incoming rays are scattered by the objects 61, 62 into respective reflected rays 633 and 634, in a completely unorganized way. This results in a lack of performance.

By contrast, with application of the ray ordering, as visible on **Figure 13,** the incoming rays are scattered by the objects 61, 62 into respective reflected rays 641 and 642, rays being reordered to point roughly in the same directions when corresponding to same or neighbouring surface element, while taking advantage of BVH data locality. This results in significantly reducing cache misses at the very first traversal of the BVH.

The functionalities of the azimuth refinement module 214 rely on the previously effected ray ordering, and are closely linked to the effective computations of light contributions through ray intersections.

Namely, for improving precision on the azimuth coordinate, an azimuth rotation interleave is executed, which is determined according to the storing depth associated with the memory elements.

More precisely, in an advantageous implementation, an elementary angle shift AS is defined as equal to the ratio of the angular precision on azimuth AP by the storing depth SD:

$$AS = AP/SD$$

For example, an 8-bits quantization leads to a precision on azimuth of 1.40° (360°/256). Considering a depth equal to 4, then AP = 1.40°, SD = 4 and then AS = 0.35°.

Then, an increased offset is applied to the azimuth of the successive ordered rays in the considered memory element. This increased offset is given by adding a unitary elementary angle shift AS for each next ordered ray of the memory element, until the angular precision AP is reached. At this stage, the shift comes back to zero instead of AP, and the process is reiterated periodically.

This azimuth incrementation is preferably executed in a GPU computing kernel, when performing light estimation by spawning several secondary rays to estimate indirect illumination during ray tracing. Considering for example a number of 8 ray directions per ray buffer for a memory element, the algorithm amounts to the following (i, j identifying the position of the considered pixel, $\theta$ the polar angle and $\varphi$ the azimuth angle):

For d = 0 to d = SD {
Fetch 8 ray directions from decoding ray buffer at [i] [j] [d]
For each ray ($\theta$, $\varphi$) from r = 0 to r = 7 {
k = d x 8 + r

$$\varphi = \varphi + \frac{2\pi}{256 \times SD} \times (k \text{ modulo } SD)$$

Perform ray intersection in direction ($\theta$, $\varphi$)
Add light contribution from r ($\theta$, $\varphi$) scattered towards the viewing direction (switching from relative to effective ray directions)
}
}
Return indirect light reaching the eye.

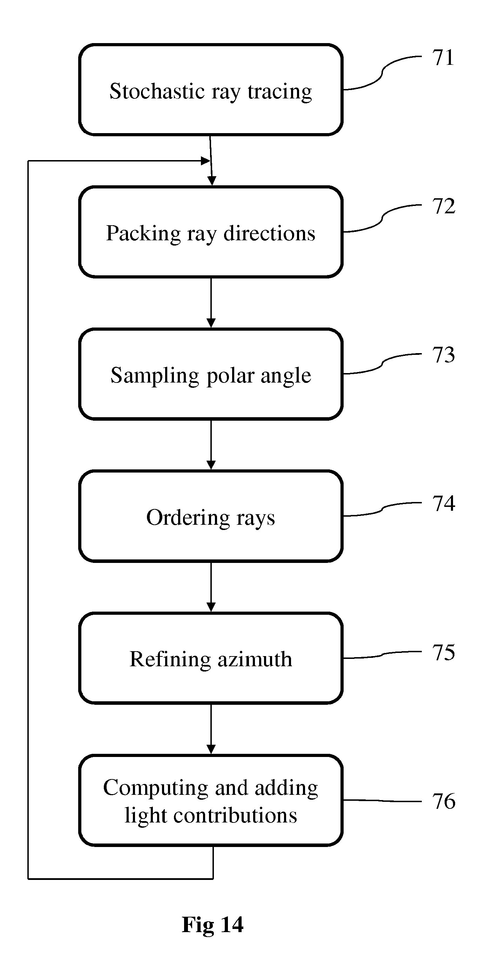

As a whole, as illustrated on **Figure 14,** main steps executed by the graphics processing apparatus 1, coupled upstream and downstream with spatial acceleration operations (such as with BVH), include:

- proceeding with stochastic ray tracing in step 71,
- packing ray directions into ray buffers and memory elements in step 72,
- sampling the polar angle of ray directions while applying power function in step 73,
- ordering rays in memory elements in function of ray directions in step 74,
- refining azimuth in memory elements with ordered rays in step 75,

- computing and adding light contributions in step 76.

Those steps are possibly reiterated further to stochastic ray tracing, insofar as the parallel computing capacities of the GPUs 120 do not cover the full set of pixels of the image to be constructed.

Naturally, the invention is not limited to the embodiments previously described.

In particular, the invention extends to any device implementing the described graphics processing method and notably to any devices comprising at least one GPU. The implementation of calculations necessary to the ray ordering and to the operations on polar and azimuth angles of ray directions is not limited either to an implementation in shader type microprograms but extends to an implementation in any program type, for example programs that can be executed by a CPU type microprocessor.

The use of the invention is not limited to a live utilisation but also extends to any other utilisation, for example for processing known as postproduction processing in a recording studio for the display of synthesis images for example.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a postprocessor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. Graphics processing device configured to participate in rendering at least one image including a set of pixels and representing a 3D scene including surface elements having light interaction features, each of said pixels being constructed from light contributions corresponding to rays coupling said pixel and said surface elements in function of at least said light interaction features,

said graphics processing device being configured to work with memory resources adapted to store at least ray data representative of ray directions of said rays,

said graphics processing device being further configured to work with at least one computation processing circuit able to process said pixels by using said ray data,

**characterized in that** said memory resources comprising memory elements respectively associated with said pixels, said graphics processing device includes a ray ordering module able to order said rays in each of said memory elements and for at least one of said surface elements, by means of an ordering method applied to said rays in function of said ray data representative of said ray directions in said memory element, said ordered rays being available to said at least one computation processing circuit in processing said pixels.

2. Graphics processing device according to claim 1, **characterized in that** said memory elements are respectively available from texels forming a matrix of said texels.

3. Graphics processing device according to any of the preceding claims, **characterized in that** said ordering method applied to said rays includes attributing respective coding values to said rays in function of said ray directions, said ray directions being relative with respect to said at least one surface element corresponding to said rays.

4. Graphics processing device according to claim 3, **characterized in that** said ray directions having spherical coordinates, said ordering method relies on a space filling curve preserving a locality of data, applied to said spherical coordinates.

5. Graphics processing device according to any of the preceding claims, **characterized in that** said ray directions of said rays being relative with respect to one of said surface elements corresponding to said rays, and having a polar angle offset with respect to a reference direction with respect to said surface element, the graphics processing device further includes a polar sampling module adapted to provide part of said ray data so that said ray directions have a precision of representation decreasing with said polar angle offset.

6. Graphics processing device according to claim 5, **characterized in that** the polar sampling module is able to apply a transforming function to a precision domain of said polar angle offset, said transforming function enabling to increase the precision of representation when the polar angle offset is smaller.

7. Graphics processing device according to any of the preceding claims, **characterized in that** for each of said memory elements, said ray directions of said rays being relative with respect to said at least one surface element and having an azimuth angle with respect to a normal to said at least one surface element with an angular precision of representation, the graphics processing device further includes an azimuth refinement module adapted to introduce for each of said memory elements at least one angle shift to the azimuth angle of said ray directions of said ordered rays, said at least one angle shift being strictly bounded by said angular precision of representation and being applied periodically to the azimuth angle of the ray directions of said ordered rays.

8. Graphics processing device according to claim 7, **characterized in that** said ray directions being grouped for said memory element into a number of basic ray sets, said number being called the storing depth, the azimuth refinement module is configured to apply said at least one angle shift to the azimuth angle with a periodicity equal to the storing depth for each of said angle shifts, and to interleave said angle shifts.

9. Graphics processing device according to any of the preceding claims, **characterized in that** said rays are chosen and processed according to a stochastic ray tracing method, said rays being secondary rays corresponding to indirect illumination in rendering said image, and being spawned from scattering on said surface elements.

10. Graphics processing device according to any of the preceding claims, **characterized in that** said graphics processing device is provided for threads dedicated respectively to said pixels and executed respectively in parallel by multiple of said at least one computation processing circuit, said threads being grouped into thread blocks, each of said thread blocks sharing a common cache memory of level 1 for said threads.

11. Graphics Processing Unit or GPU comprising computation processing circuits as processor cores, **characterized in that** it includes a graphics processing device according to any of claims 1 to 10.

12. GPU according to claim 11, **characterized in that** the 3D scene comprising geometric objects having said surface elements, said GPU further includes a spatial acceleration module, configured to group said objects according to a spatial acceleration scheme with hierarchization.

**13.** Memory structure for graphics processing configured to participate in rendering at least one image including a set of pixels and representing a 3D scene including surface elements having light interaction features, each of said pixels being constructed from light contributions corresponding to rays coupling said pixel and said surface elements in function of at least said light interaction features ,
said memory structure storing at least ray data representative of ray directions of said rays, **characterized in that** said memory structure comprising memory elements respectively associated with said pixels, said rays are ordered in each of said memory elements and for at least one of said surface elements, by means of an ordering method applied to said rays in function of said ray data representative of said ray directions in said memory element.

**14.** Process for graphics processing adapted to participate in rendering at least one image including a set of pixels and representing a 3D scene including surface elements having light interaction features, each of said pixels being constructed from light contributions corresponding to rays coupling said pixel and said surface elements in function of at least said light interaction features ,
said process using memory resources storing at least ray data representative of ray directions of said rays, said process further involving at least one computation processing circuit processing said pixels by using said ray data, **characterized in that** said memory resources comprising memory elements respectively associated with said pixels, said process for graphics processing includes ordering said rays in each of said memory elements and for at least one of said surface elements, by means of an ordering method applied to said rays in function of said ray data representative of said ray directions in said memory element, said ordered rays being available to said at least one computation processing circuit in processing said pixels.

**15.** Computer program for graphics processing, comprising software code adapted to perform ray ordering according to a process compliant with claim 14.

1

11 — CPU

12 — Graphics card

120 — GPUs

121 — GRAM

1211 — Parameters repres. the virtual scene

1212 — Parameters for space filling curve

1213 — Parameters for polar angle

1214 — Parameters for azimuth angle

130

Display

13

14 — I/O devices

16 — ROM

19 — RF unit

17 — RAM

Prog

170

Parameters repres. the virtual scene

171

15

18 — Power supply

**Fig 1**

120

2

Spatial acceleration module — 210

Stochastic ray tracing module — 211

Polar sampling module — 212

Ray ordering module — 213

Azimuth refinement module — 214

Rendering module — 215

**Fig 2**

**Fig 3**

31

3

30

34

36

32

35

37

33

**Fig 4**

47

$V_1$

$V_o$

$V_n$

46

45ij

**Fig 6**

43

42

430

41

43dij

432ij

431ij

42ij

41ij

430ij

4

| $V_o$ | $V_1$ | $V_2$ | $V_3$ | $V_4$ | $V_5$ | $V_6$ | $V_7$ |
|---|---|---|---|---|---|---|---|

**Fig 5**

**Fig 7**

**Fig 8**

Fig 9

Fig 10

**Fig 11**

Fig 12

Fig 13

Stochastic ray tracing — 71

Packing ray directions — 72

Sampling polar angle — 73

Ordering rays — 74

Refining azimuth — 75

Computing and adding light contributions — 76

**Fig 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DOMINIK WODNIOK ; ANDRÉ SCHULZ ; SVEN WIDMER ; MICHAEL GOESELE.** Analysis of Cache Behavior and Performance of Different BVH Memory Layouts for Tracing Incoherent Rays. *Proceedings of the Eurographics Sympsium on Parallel Graphics and Visualization (EGPV 2013),* 2013, 57-64

- **BOCHANG MOON ; YOUNGYONG BYUN ; TAE_JOON KIM ; PIO CLAUDIO ; HYE-SUN KIM ; YUN-JI BAN ; SEUNG WOO NAM ; SUNG-EUI YOON.** Cache-Oblivious Ray Reordering. *ACM Transactions on Graphics,* 2010, vol. 29 (3
- **TIMO AILA ; TERO KARRAS.** Architecture Considerations for Tracing Incoherent Rays. *High-Performance Graphics,* 2010, 113-122